# EUROPEAN PATENT APPLICATION

(11) **EP 4 800 614 A1**
(43) Date of publication of application: **02.09.2026**
(21) Application number: 26156644.2
(22) Date of filing: 05.02.2026
(51) Int. Cl.: G06Q 10/04, G06Q 10/06, G06Q 10/08, G08G 5/21, G08G 5/53, G08G 5/55

(54) **SYSTEM AND METHOD OF ADAPTIVE AUTOMATION OF TASKS ON ELECTRONIC CHECKLISTS FOR VEHICLE OPERATORS**

(30) Priority: 28.02.2025 IN 202511017781; 14.04.2025 US 202519177890
(71) Applicant: Honeywell International Inc., Charlotte, NC 28202 (US)
(72) Inventor: MATHEW, Sabu, Charlotte, 28202 (US)
(74) Representative: Ingrassia, Fisher & Lorenz UK Ltd.

(57) **Abstract**

A method includes receiving data of an automation index factoring non-real time feasibility factors and including individual tasks to operate a vehicle and assignments of the individual tasks each to one of multiple available automation levels. Each automation level is associated with a different involvement of a user to perform the individual task to operate the vehicle. The method includes generating a first checklist of the tasks including factoring vehicle real-time context factors including a current state of the vehicle, a workload of at least one vehicle operator, a current phase of a mission of the vehicle, and an environment near the vehicle or to be near the vehicle. The method includes displaying the first checklist and at least one graphical user interface (GUI), and providing options of selectable automation levels including fully automated, semi-automated, and manual to be selected by a vehicle operator for tasks on the first checklist.

## Description

### CROSS REFERENCE TO RELATED APPLICATION

This application claims priority to India Provisional Patent Application No. 202511017781, filed February 28, 2025, the entire content of which is incorporated by reference herein.

### TECHNICAL FIELD

The subject matter described herein generally relates to vehicle systems, and more particularly, to adaptive checklist management for vehicles.

### BACKGROUND

For vehicles such as aircraft, a checklist of tasks to be performed may be provided to pilots during various phases of a mission, whether pre-flight, during a flight, or post-flight. These checklists often involve tasks with a mix of automation such that some of the tasks are to be performed manually while others are completely automated, and yet others are semi-automated and require some pilot involvement, such as providing confirmation of parameters. The different automation levels can lead to inefficiency and increased operator workload if the current vehicle context is not considered when deciding the appropriate level of automation for the individual tasks. It also can be significantly time consuming and distracting for a vehicle operator to manually change the automation levels of tasks on the checklists when desired. Hence, it is desirable to provide a vehicle method and system that permits both automatic and manual task automation level adjustment to increase efficiency and decrease operator workloads.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one example implementation, a method includes receiving, by at least one processor, data of an automation index factoring non-real time feasibility factors and including individual tasks to operate a vehicle and assignments of the individual tasks each to one of multiple available automation levels. Each automation level is associated with a different involvement of a user to perform the individual task to operate the vehicle. The method includes generating, by at least one processor, a first checklist of the tasks including factoring vehicle real-time context factors. The vehicle real-time context factors include a current state of the vehicle, a workload of at least one vehicle operator, a current phase of a mission of the vehicle, and an environment near the vehicle or to be near the vehicle. The method also includes displaying, by at least one processor, the first checklist on a display device on the vehicle, and displaying at least one graphical user interface (GUI) on the display device and providing options of selectable automation levels including fully automated, semi-automated, and manual to be selected by at least one vehicle operator for tasks on the first checklist. The method may include revising, by at least one processor, the first checklist to form a revised checklist depending on an automation level selection by use of the GUI, displaying, by at least one processor, the revised checklist with the automation level selections, and transmitting, by at least one processor, one or more signals to at least one vehicle system to perform at least one task from the revised checklist having a changed automation level selection.

In another example implementation, a system includes memory and processing circuitry forming at least one processor communicatively coupled to the memory and being arranged to operate by receiving data of an automation index factoring non-real time feasibility factors and includes individual tasks to operate a vehicle and assignments of the individual tasks each to one of multiple available automation levels. Each automation level is associated with a different involvement of a user to perform the individual task to operate the vehicle. Generating a first checklist of the tasks includes factoring vehicle real-time context factors. The vehicle real-time context factors include a current state of the vehicle, a workload of at least one operator of the vehicle, a current phase of a mission of the vehicle, and an environment near the vehicle or to be near the vehicle. The method includes displaying the first checklist on a display device on the vehicle, and displaying at least one graphical user interface (GUI) on the vehicle and providing options of selectable automation levels including fully automated, semi-automated, and manual to be selected by at least one vehicle operator for tasks on the first checklist. The method includes revising the first checklist to form a revised checklist depending on automation level selections by use of the GUI; displaying the revised checklist with the automation level selections, and transmitting one or more signals to at least one vehicle systems to perform at least one task from the revised checklist having a changed automation level selection.

In yet another example implementation, non-transitory computer-readable medium having computer-executable instructions stored thereon that, when executed by at least one computing device, cause the computing device to operate by receiving data of an automation index comprising individual tasks to operate a vehicle and assignments of the individual tasks each to one of multiple available automation levels. Each automation level is associated with a different involvement of a vehicle operator to perform the individual tasks to operate the vehicle. Assignment of the tasks to one of the automation levels depends on at least one of: capabilities of the vehicle, regulations in an industry of the vehicle, a complexity of the task, repetitiveness of the task, and a priority level of the task. The method includes generating a checklist of the tasks. The checklist is associated with one of the automation levels, and adding a task to the checklist depends on real-time contextual factors associated with operating the vehicle including at least one of: a vehicle operator workload, a current phase of a mission of the vehicle, a mission objective, an environment near the vehicle or to be near the vehicle, and a state of the vehicle. The method includes using the checklist to determine which automation level to apply to perform a task on the checklist.

Furthermore, other desirable features and characteristics of the system and method disclosed herein will become apparent from the subsequent detailed description and the appended claims, taken in conjunction with the accompanying drawings and the preceding background.

### BRIEF DESCRIPTION OF THE DRAWINGS

Implementations of the subject matter will hereinafter be described in conjunction with the following drawing figures, wherein like numerals denote like elements, and:
FIG. 1 is a schematic diagram of an example aircraft system according to at least one of the implementations herein;
FIG. 2 is a schematic diagram of an example system of task automation level assignment for a vehicle task checklist according to at least one of the implementations disclosed herein;
FIGS. 3 is a flow chart of an example method of assigning adjustable task automation levels to tasks on a vehicle checklist according to at least one of the implementations disclosed herein;
FIG. 4A is a schematic diagram of an example checklist menu according to at least one of the implementations disclosed herein;
FIG. 4B is a schematic diagram of an example image of a task automation selection activator to display on a vehicle according to at least one of the implementations disclosed herein;
FIG. 4C is a schematic diagram of an example image of a task automation list factors menu to display on a vehicle according to at least one of the implementations disclosed herein;
FIG. 5 is a schematic diagram of an example display of a task automation list of fully automated tasks according to at least one of the implementations disclosed herein;
FIG. 5A is a schematic diagram of an example display of a task automation level drop down menu for displays of task automation lists according to at least one of the implementations disclosed herein;
FIG. 6 is a schematic diagram of an example override pop-up window according to at least one of the implementations disclosed herein;
FIG. 7 is a schematic diagram of an example display of a task automation list of semi-automated tasks according to at least one of the implementations disclosed herein;
FIG. 8 is a schematic diagram of an example avionics page showing a confirmation activator for a semi-automated task according to at least one of the implementations disclosed herein; and
FIG. 9 is a schematic diagram of an example display of a task automation list of manual tasks according to at least one of the implementations disclosed herein.

### DETAILED DESCRIPTION

The following detailed description includes example implementations that are not intended to limit the subject matter of the application and uses thereof. Furthermore, there is no intention to be bound by any theory presented in the preceding background, brief summary, or the following detailed description.

Implementations of the subject matter described herein relate to systems and methods that provide a better balance between vehicle operator workload and increased cockpit efficiency, and may apply equally to other types of vehicles. This is accomplished by first generating an initial automation index that uses preliminary factors (or feasibility factors) related to a specific aircraft type, task properties, and industry regulations that provide restrictions. This results in a fairly customized initial task checklist for an aircraft. Thereafter, whether pre-flight (or pre-mission) or during a mission, an automation level selection system may perform real-time context monitoring of the aircraft, aircrew, and environment around the aircraft (or other vehicle if not an aircraft) and that can be used to automatically modify the assigned automation levels of particular tasks. Automatically generated first checklists are then displayed to the aircrew and with automation levels automatically assigned to tasks on the checklists that are deemed appropriate for a vehicle real-time context. By one form, the first checklists are one or more automation level-specific task lists where all of tasks on a single task list have a same automation level, and when multiple such checklists are provided, each task list has tasks of a different task level. Thus, by one form, this may include three different checklists including a fully automated task checklist, a semi-automated task checklist, and a manual task checklist.

The vehicle operator then may revise the automation levels. The first checklists may be displayed on the vehicle to the vehicle operator (or pilot). The vehicle operator or aircrew also may be provided options on the checklist displays to dynamically adjust the automation levels of the tasks when the pilot or aircrew finds it appropriate for a particular situation at the aircraft. Specifically, the vehicle operator may adjust the automation level of multiple checklists being worked on for a particular operation, such as landing or performing an approach, and with a single press of a button. Otherwise, a vehicle operator may change the automation level of all tasks on a single checklist of tasks with the same automation level. Such a checklist may be for a single operation (such as landing) or sub-operation (such as lowering landing gear), or may hold tasks from multiple different operations being performed. Individual tasks also may have their automation level manually changed as well by using an override mechanism. It will be appreciated that the term "operator" refers to any one or more operators of a vehicle, and for example on an aircraft, may refer to a pilot, co-pilot, or any member of an aircrew and may collectively refer to an aircrew or vehicle crew.

With this arrangement, the method and system of context adaptive task automation level described herein achieves a better balance between automating routine tasks to enhance efficiency and preserving the aircrew's ability to intervene and make decisions when necessary. Thus, this arrangement enhances operational efficiency, reduces pilot workload, and supports the crew in executing tasks related to mission objectives, especially in critical flight situations. The disclosed method and system enhances checklist functions to be an operative part of fully functioning mission control systems rather than simple, non-interactive digital versions of vehicle checklists.

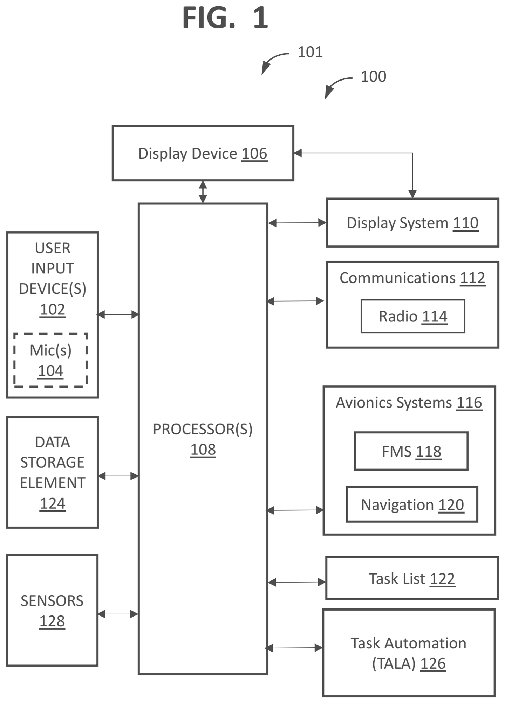

Referring to FIG. 1, an example system 100 may be used by a vehicle 101, such as an aircraft although any other vehicles using digital checklists may be used instead such as any watercraft, landcraft (such as trucks or automobiles), spacecraft, and so forth. In an example implementation, the system 100 is at least partially on an aircraft 101 and includes, without limitation, one or more user input devices 102 that may have one or more microphones 104, a display device 106, one or more processors 108, a display system 110, a communications system 112 with a radio 114, avionics systems 116 that may include at least a flight management system (FMS) 118 and a navigation system 120, a task list unit 122, a data storage element 124, a task automation unit (or task automation level adjustment (TALA) system 126, and a sensors unit 128.

In example implementations, the display device 106 is an electronic display capable of graphically displaying flight information or other data associated with operation of the aircraft under control of the display system 110 and/or processor 108. In this example, the display device 106 is coupled to the display system 110 and the processor 108, and the processor 108 and the display device 106 are cooperatively configured to display, render, or otherwise convey one or more graphical representations or images associated with operation of the aircraft on the display device 106, and particularly at least one or more checklist-related pages that show operational tasks to be performed to operate the vehicle and automation levels as described herein in addition to avionics pages used to operate the vehicle, such as a primary flight display (PFD). The user input device 102 is coupled to the processor(s) 108 and may or may not be considered entirely or partially part of display device 106. The user input device 102 and the processor 108 are cooperatively configured to allow a user (e.g., a vehicle operator or a pilot) to interact with the display device 106 and/or other elements of the system 100, as described in greater detail below. By one form, the display device 106 is or has one or more graphical user interfaces (GUIs), and may include or be communicatively coupled to, the user input device 102. Depending on the implementation, the user input device(s) 102 may be a keypad or keyboard (whether physical or virtual), touchpad, mouse, touch panel (or touchscreen), joystick, knob, line select key and/or another suitable device adapted to receive input from a user. This may include touch screens to receive signals to activate a button, toggle, menu options, or other graphical user interface (GUI) arrangements. This also may include a data entry field and the value to be input into that field is typed or selected from a menu. In some example implementations, the user input device 102 includes an audio input device, such as the microphone 104, audio transducer, audio sensor, or the like, which is adapted to allow a user to provide audio input to the system 100 in a "hands free" manner using speech recognition.

The processor 108 is at least one processor formed by processor circuitry and includes the hardware, software, and/or firmware components configured to operate any of the units described herein, to facilitate communications and/or interaction between the elements of the system 100, and to perform additional tasks and/or functions to support operation of the system 100, as described in greater detail below. Depending on the implementation, the processor 108 may be one or more of a general purpose processor such as a central processing unit (CPU), a content addressable memory, a digital signal processor (DSP), an application specific integrated circuit, a field programmable gate array, any suitable programmable logic device, discrete gate or transistor logic, processing core(s), discrete hardware components, or any combination thereof, designed to perform the functions described herein. The processor 108 also may be implemented as a combination of computing devices, e.g., a plurality of processing cores, a combination of a digital signal processor and a microprocessor, a plurality of microprocessors, one or more microprocessors in conjunction with a digital signal processor core, a System on a Chip (SoC), or any other such suitable configuration or combination. In practice, the processor 108 includes processing logic that may be configured to perform the functions, techniques, and processing tasks associated with the operation of the system 100, as described in greater detail below. Furthermore, the steps of a method or algorithm described in connection with the implementations disclosed herein may be embodied directly in hardware, in firmware, in a software module (or unit) executed by the processor 108, or in any practical combination thereof. For example, in one or more implementations, the processor 108 includes or otherwise accesses the data storage element (or memory) 124, which may be realized as any suitable non-transitory short or long term storage media capable of storing programming instructions for execution by the processor 108. The code or other computer-executable programming instructions, when read and executed by the processor 108 (or computing device), cause the processor 108 to support or otherwise perform certain tasks, operations, functions, and/or processes described herein.

The display system 110 is the hardware, software, and/or firmware components configured to control the display and/or rendering of the checklists described herein, one or more navigational maps, and/or other displays pertaining to operation of the aircraft and/or onboard systems or units 112, 116, 118, 120, 122, and 126 and displayed on the display device 106. In this regard, the display system 110 may access or include one or more databases suitably configured to support operations of the display system 110, such as, for example, a terrain database, an obstacle database, a navigational database, a geopolitical database, a terminal airspace database, a special use airspace database, or other information for rendering and/or displaying navigational maps and/or other content on the display device 106.

In the illustrated implementation, the aircraft system 100 includes a data storage element 124, which contains databases to operate the aircraft such as those mentioned above and to operate the TALA system 126 described below and may include a checklist database, a feasibility (or preliminary factors) database, and a current context (or adjustment factors) database, sensor data databases, and so forth. Depending on the implementation, the data storage element 124 may be physically realized using RAM memory, ROM memory, flash memory, cache, registers, a hard disk, or another suitable data storage medium known in the art or any suitable combination thereof.

In the present example, the processor 108 is coupled to the FMS unit 118 that collects data indicating the current state of the aircraft as well as input from the aircrew and/or external air traffic entities such as the air traffic control (ATC). The FMS unit 118 then generates flight plans and activates an automatic pilot to operate the aircraft. Particularly, the FMS unit 118 automates flight planning, navigation, performance management, and guidance to reduce pilot workload and enhance operational efficiency. Once the FMS unit 118 processes the various inputs and computes the optimal flight path, the FMS unit 118 communicates the flight plan to the autopilot and other avionics systems. Additionally, the FMS unit 118 may calculate fuel consumption, estimated time of arrival, and required thrust settings for different flight phases.

The navigation system 120 is configured to provide real-time navigational data and/or information regarding operation of the aircraft. The navigation system 120 may be realized as a global positioning system (GPS), inertial reference system (IRS), or a radio-based navigation system (e.g., VHF omni-directional radio range or long range aid to navigation (LORAN)), and may include one or more navigational radios or other sensors suitably configured to support operation of the navigation system 120, as will be appreciated in the art. The navigation system 120 is capable of obtaining and/or determining the instantaneous position and heading of the aircraft, that is, the current (or instantaneous) location of the aircraft (e.g., the current latitude and longitude) and the current (or instantaneous) altitude or above ground level for the aircraft.

In the illustrated implementation, the processor 108 also is coupled to the communications system 112, which is configured to support communications to and/or from the aircraft. For example, the communications system 112 may support communications between the aircraft and an air traffic control or another suitable command center or ground location. Thus, the communications system 112 may be realized using a radio communication system or device (or unit) 114 and/or another suitable data link system. The communications system(s) 112 is, has, or communicates with the avionics systems 116 or other external sources, such as, for example, other aircraft, an air traffic controller, or the like.

Depending on the implementation, the communications system(s) 112 may include one or more of a very high frequency (VHF) radio communications system, a controller-pilot datalink communications (CPDLC) system, an aeronautical operational control (AOC) communications system, an aircraft communications addressing and reporting system (ACARS), and/or the like. In the case of datalinks, audio messages may be pre-transcribed into digital messages that are then transmitted to the avionics systems 116 on the aircraft via the communications system 112.

In example implementations, the processor 108 is also coupled to the avionics systems 116 including the FMS 118, which is coupled to the navigation system 120 and other avionics systems to support navigation, flight planning, and other aircraft control functions, as well as to provide real-time data and/or information regarding the operational status of the aircraft to the processor 108. The system 100 and/or aircraft 101 may include numerous other avionics systems for obtaining and/or providing real-time flight-related information that may be displayed on avionics displays on the display device 106 or otherwise provided to a vehicle operator (e.g., a pilot). For example, practical implementations of the system 100 and/or aircraft will likely include one or more of the following avionics systems 116 suitably configured to support operation of the aircraft: a weather system, an air traffic management system, a radar system, a traffic avoidance system, an autopilot system, an auto-thrust system, a flight control system, hydraulics systems, pneumatics systems, environmental systems, electrical systems, engine systems, trim systems, lighting systems, crew alerting systems, electronic checklist systems, an electronic flight bag (EFB) and/or another suitable avionics system.

As an unlimited list, the sensors 128 (or sensor system) may be used to monitor the real time state of the vehicle and this may include monitoring of engines (manifolds, turbines, fuel delivery, vibration levels), hydraulic systems (pressure levels, fluid flow, control surfaces such as flaps, landing gear, and brakes), fuel systems (fuel pressure, flow rate, moisture levels), environmental control systems (cabin pressurization, airflow, oxygen levels), flight control systems (position of ailerons, elevators, rudders, flaps), landing gear (retraction, position, hydraulic pressure), electrical systems (voltage, current levels, potential leaks, smoke detection), cabin and cockpit (oxygen levels, smoke, fire, temperature, passenger comfort systems, electronic passenger communication and entertainment systems, and so forth), avionics and airframe (vibration, corrosion detection, temperature, fluid leaks), and emergency oxygen systems (oxygen flow). Others not listed here may be used as well.

Otherwise, in various implementations, sensors 128 also may be used for aircraft motion control and navigation. In this case, the sensors 128 supplies, without limitation, one or more of: inertial reference system measurements providing a location, Flight Path Angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data.

The type of sensors 128 providing data on the aircraft to perform the monitoring may include temperature sensors (thermocouples, resistance temperature detectors, infrared sensors), pressure sensors (manifold pressure sensors, fuel pressure sensors, hydraulic pressure sensors, cabin pressure sensors), vibration sensors (accelerometers, piezoelectric sensors), flow sensors (fuel flow sensors, airflow sensors, oil flow sensors), position sensors (potentiometers, linear variable differential transformers, rotary encoders), proximity sensors (inductive sensors, capacitive sensors, optical sensors), oxygen sensors (oxygen depletion sensors, oxygen flow sensors), voltage and current sensors (voltage sensors, current sensors), leak detection sensors (fluid leak sensors, gas leak sensors), smoke and fire sensors (smoke detectors, heat sensors), and chemical sensors (corrosion detection sensors, moisture sensors). Others may be used that are not listed here.

The term sensor (and in turn the sensors unit 128) includes software diagnostic applications in addition to mechanical or physical sensors. Thus, a continuous monitoring application or system, or a built-in-test (BIT) type of application, may be referred to as, or is included as, sensors for the purposes of describing the present application herein. Thus, the monitoring of avionics systems such as the autopilot, navigation, and/or flight management systems (FMS) to name a few examples may be monitoring real-time task execution, CPU loads, memory usage, data integrity, error logging, redundancy management, and so forth, in addition to providing expected parameter values to be compared to actual parameter values generated from physical sensors on aircraft physical components.

Also, specifically for monitoring the status of an aircrew or crew workload, the sensors 128 may include gaze tracking, eye-tracking, and gesture tracking sensors such as cameras, Galvanic Skin Response (GSR): GSR sensors may be used to measure skin conductance, which correlates with stress levels. Electromyography (EMG) sensors detect muscle tension, which can be an indicator of mental or physical stress. Speech and Voice Analysis auditory sensors may analyze speech patterns that can be used to assess stress levels, cognitive load, mental fatigue, or emotional distress. Oxygen Saturation Sensors (Pulse Oximeters) may measure oxygen saturation levels that can also indicate stress or fatigue in the pilot. Accelerometers and Motion Sensors may be used to detect physical movement and posture changes, which can indicate a level of comfort or fatigue, as well as stress. Cockpit Environment Sensors may measure environmental factors such as temperature, pressure, noise, and light that may contribute to stress.

Other sensors 128 may include thermal imaging and/or infrared sensors that may be used to detect significant fluctuations or elevated temperatures that can indicate physical or cognitive stress, fatigue, or even illness. Thermal monitoring can be used to detect such variations. Respiration monitors may be used to track breathing patterns. Pupillometry monitors may be used to measure changes in pupil size, which can vary depending on cognitive load, stress, or fatigue. Electrodermal activity (EDA) sensors may track the full electrodermal response of the vehicle operators. Performance metrics or task load index (NASA-TLX) may be used to assess mental workload. Pilots or crew members can self-report perceived workload levels, and these are sometimes combined with real-time sensor data (like eye-tracking or GSR) to get a fuller picture of cognitive load during specific tasks. Task performance metrics (such as data from the FMS), flight instruments, and other in-cockpit interfaces indicate the complexity and workload associated with specific tasks that can provide indirect information about cognitive load. All of these sensors, combined with machine learning or other data processing tools, can provide a comprehensive picture of crew workload, stress, and cognitive state.

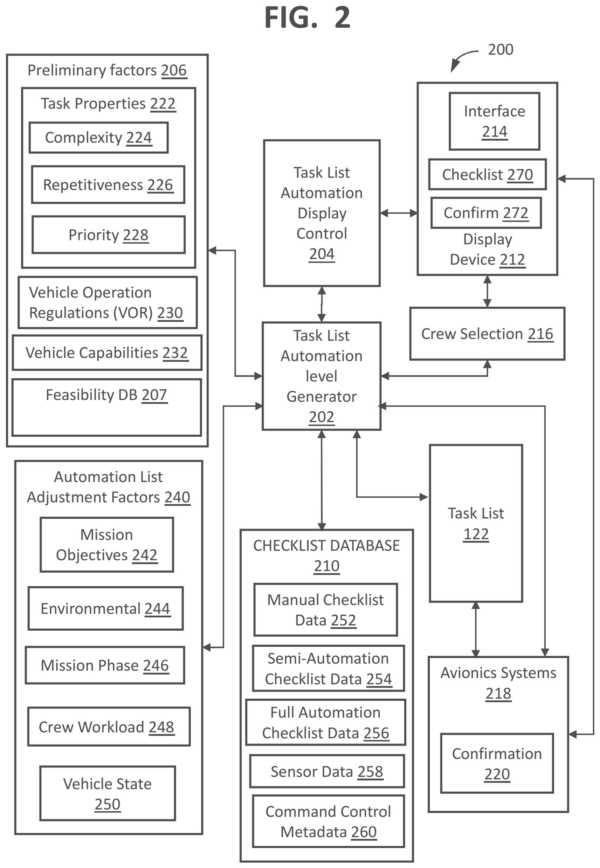

The processor 108 also is coupled to the task list unit 122 and the TALA system 126 to adjust automation levels of tasks on the vehicle checklists and are described below in detail with FIG. 2.

It should be understood that FIG. 1 is a simplified representation of the system 100 for purposes of explanation and ease of description, and FIG. 1 is not intended to limit the application or scope of the subject matter described herein in any way. It should be appreciated that any of the systems, units, and devices of system 100 may be entirely onboard the aircraft or partially onboard and partially remote from the aircraft. By one form, at least the display device 106 and sensors 128 are entirely onboard. Those parts of systems, modules, and units of system 100 external to the aircraft may be communicatively coupled to the remaining elements or parts of the system 100 on the aircraft (e.g., via a data link and/or communications system 112). Similarly, in some implementations, the data storage element 124 may be located externally to the aircraft and communicatively coupled to the processor 108 via a data link and/or communications system 112. Furthermore, practical implementations of the system 100 and/or aircraft will include numerous other devices and components for providing additional functions and features, as will be appreciated in the art. In this regard, it will be appreciated that although FIG. 1 shows a single display device 106, in practice, additional display devices may be present onboard the aircraft. Additionally, it should be noted that in other implementations, features and/or functionality of processor 108 described herein can be implemented by or otherwise integrated with the features and/or functionality provided by the FMS 118. In other words, some implementations may integrate the processor 108 with the FMS 118. In yet other implementations, various aspects of the subject matter described herein may be implemented by or at an electronic flight bag (EFB) or similar mobile electronic device that is communicatively coupled to the processor 108 and/or the FMS 118 (or has the processor 108). Thus, the display device 106 may be a mobile device that displays one or more checklist-related pages as described herein at least while the display device 106 is aboard the aircraft.

Referring to FIG. 2, a task automation level adjustment (TALA) unit or system 200, similar or the same as the TALA system 126, generates, assigns, and adjusts automation levels of checklist tasks received from task list unit 122. The TALA system 200 is operated by the processor 108. In one or more example implementations, the TALA system or unit 200 may be implemented or otherwise provided entirely onboard a vehicle, such as on an aircraft. However, in alternative implementations, the TALA system 200 may be at least partially implemented independent of any aircraft or vehicle, except for a display device and sensors on the vehicle that communicates remotely with other units of the TALA system 200 and shows the checklist pages on the aircraft or vehicle.

The example TALA system 200 here includes a task list automation level generator (TLALG) unit 202 that receives task lists from the task list unit 122, assigns automation levels to the tasks, and generates the checklists with the automation levels that are to be displayed. The TALA system 200 also may have a task list automation display control 204, a preliminary factors (or feasibility) unit 206 with a feasibility database 207, an automation list adjustment factors (or vehicle real-time context) unit or database 240, a checklist database 210, a display device 212, a crew selection unit 216, and one or more avionics systems 218 the same or similar to avionics systems 116. The display device 212 may have an interface 214 and the display system 110 (FIG. 1). The display device 212 may show a checklist-related page 270 and/or a confirmation page 272 of an avionics system 116. One or more of these units or sub-units of the TALA system 200 may be considered separate from the TALA system 200, where the TALA system 200 is alternatively formed of at least the TLALG unit 202, while the other units mentioned may operate independently.

The preliminary factors unit 206 (or feasibility factors unit) has sub-units to obtain pre-collected data to determine which automation levels are available for which tasks, and then to generate a feasibility table of those availabilities. This generally includes the collection of non-real-time data, although real-time data may be collected here as well. This may include a task properties unit 222, a vehicle operation regulations (VOR) unit 230, and a vehicle capabilities unit 232. The task properties unit 222 may have a complexity unit 224, a repetitiveness unit 226, and a priority unit 228. These units analyze the automatic and manual operations to be performed for a particular task, where generally the less complex, the more repetitive, and the lower the priority, the more likely a task is to be fully automated. Complexity here refers to the number or type of factors or steps in a task to be considered to make a decision as to a control setting or vehicle parameter value, where the automation may miss a factor for highly complex tasks that a vehicle operator would not miss.

Other feasibility factors include the VOR where industry regulations will not permit a certain automation level and must be performed manually, such as with an emergency maneuver, or speed settings that must be confirmed with semi-automated levels for safety reasons, for example.

Vehicle capabilities list the specifications of a vehicle and the components of the vehicle when important, such as a maximum thrust or speed that cannot be safely exceeded for a specific aircraft or aircraft component (such an engine) of a specific aircraft company, type, model, and so forth, and therefore also may limit which automation levels can apply to a related task. The resulting availabilities are provided in a feasibility table (See Table 1 below) and/or automation index (Table 2 below) that may be held in a database 207 of the preliminary factors unit 206, or the preliminary factors unit 206 may be a feasibility database.

The automation list adjustment factors unit 240 (or vehicle real-time context factors unit) may have sub-units to monitor the current context of the vehicle or aircraft. The automation list adjustment factors unit 240 may have sub-units such as a mission objects unit 242, an environmental unit 244, a mission phase unit 246, a crew workload unit 248, and a vehicle state unit 250. Each of these sub-units receives sensor data of relevant objects being monitored to determine an automation level of a task. These units may analyze the sensor data and provide the analysis and/or the sensor data in a format expected by the TLALG unit 202, such as sensor setting values of normalized scales and so forth.

The TLALG unit 202 is arranged to receive the monitoring data or sensor data to determine the vehicle real-time context and assign the automation levels of the tasks as limited by the feasibility table. This may be performed by using rule based algorithms and some examples are described below.

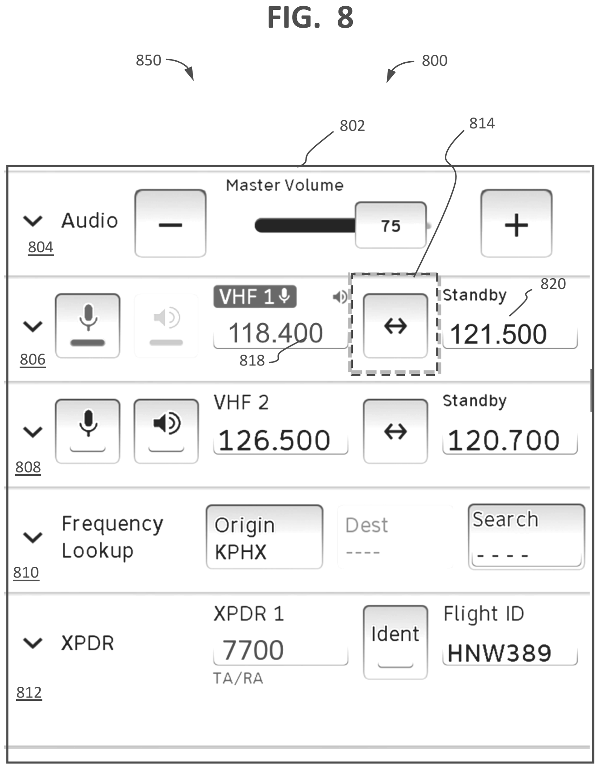

Once the tasks are assigned an automation level, the generated task-automation level assignments may be stored in the checklist database 210. For this purpose, the checklist database 210 may have manual checklist data 252, semi-automated checklist data 254, and full automation checklist data 256, as well as sensor data 258, and command control metadata 260. Sensor data may be saved when a basis for automation level assignments needs to be maintained. For example, some automation level decisions may be based on temporal changes in sensor data that are averaged or combined over a duration as one example. The command control metadata 260 may provide additional data that can be used to control the checklist execution, such as identification of applicable sensors and other sensor data, sensor limits, timers, flags, and tokens that may identify an associated confirmation display window 800 or confirmation display switch or widget 814 (described below with FIG. 8).

The task list automation display control 204 receives the checklist data from the TLALG unit 202 and generates the desired image data to render the generated checklist pages. This may include generating checklist pages that are the lists of tasks or other related pages, such as automation level selection pages. The task list automation display control 204 also controls which pages are to be displayed when the system is activated including pages that support the task list pages such as an front or activation page, checklist or automation level selection pages or menus, settings, and so forth. The image data is then provided to the display device 212 for display of the checklist-related pages. It will be appreciated herein that the terms display, image, page, and picture may be used interchangeably to represent a rendering on the display device 212. Other avionics pages may be displayed on display device 212 as well, including displaying confirmation pages 272 that are to receive a confirmation at a confirmation unit 220 and from a vehicle operator upon activation of a semi-automated task.

The crew selection unit 216 receives vehicle operator selections described in detail below and from the interface 214. The interface 214 may be or have a graphical user interface (GUI) of the display device 212 to receive vehicle operator input including automation level changes of the tasks on the checklists as described in detail below. The vehicle operator may enter selections, parameter values, or text by touchscreen, hardware, virtual keypad or keyboard, touchscreen keypad or keyboard, mouse and virtual keypad or keyboard, and so forth forming at least part of the interface 214 to enter or update automation level selections of tasks on the displayed checklist pages. Upon receiving vehicle operator selections from the crew selection unit 216, the TLALG unit 202 then may generate revised checklists or task lists to be displayed and executed.

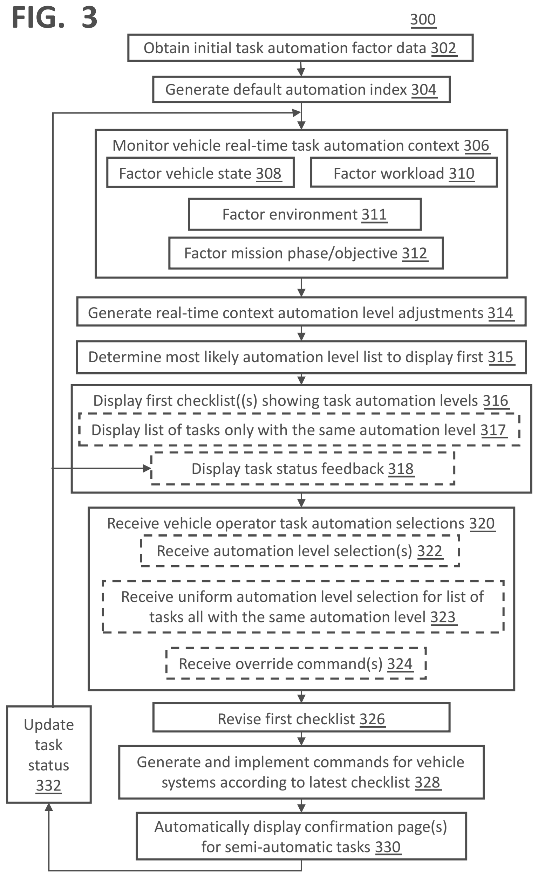

The TLALG unit 202 may communicate with the avionics systems 218 to provide indicators of the automation levels of the tasks so that the avionics systems 218 can be set for automated or semi-automated operation, or to await performance of manual execution by the vehicle operator. More details are provided below with process 300 (FIG. 3).

Referring to FIG. 3, a process 300 of task list automation level adjustment for a vehicle is described according to at least one of the implementations herein. The process 300 includes operations 302 to 332, generally numbered evenly. Systems, device, modules, units, and display pages of any of FIGS. 1-2 and 4-9 may be referred to for explaining process 300 where relevant.

Process 300 may include "obtain initial task automation factor data" 302, and as mentioned above, this includes at least non-real time data such as the task properties, VOR, and vehicle specifications for the specific aircraft or vehicle using the adjustable automation level assignments. These operations may be considered preliminary operations by the preliminary factors unit 206 to construct feasibility tables to be held in the feasibility or preliminary factors database 207 (or other remote memory), and may or may not be performed on a particular vehicle. Thus, such preliminary feasibility assessment 302 may be performed at a remote site such as a vehicle manufacturing facility, maintenance facility, testing center, and/or other locations.

This operation 302 may include identification and prioritization of tasks within missions to be performed, and the tasks on the checklists to be analyzed may be obtained from the task list unit 122. This may include typical or standard task lists usually used on a specific aircraft, and may be updated as such checklists are updated for the aircraft. Once the tasks of the various vehicle task lists are identified, the sub-units (task properties unit 222, VOR unit 230, vehicle capabilities unit 232, and others when present) determine the likely appropriate automation level for each task, or already have a preliminary listing or rules for the feasibility determination for specific tasks. The routine and repetitive tasks that do not require continuous crew attention are better candidates for automation. Critical and high-priority tasks, on the other hand, are designated for manual intervention. As explained above, complexity of a task also is considered where the more complex a task, the more likely the task should be performed manually, and the risk is higher that an automated system may miss something. Thus, routine and procedural tasks are identified within the mission workflow that can be automated without compromising safety or mission success. The tasks more likely to be manual tasks may include system checks, data entry, or monitoring tasks for example that do not require constant or close attention by the vehicle operator or the automated avionics systems.

The determination as to whether an automation level is available (or feasible) for a task can be determined in a number of different ways or with a number of different algorithms. By one form, if any single feasibility factor (task properties, regulations (or VOR), vehicle capabilities, or any others) indicates a task should not be performed at a certain automation level, then that automation level will not be available for that task. An example feasibility table is provided below for mission manager electronic check list (MMECL) tasks.

**Table 1: Example Automation Feasibility Assessment**

| MMECL Task | Automation Feasibility Assessment | | |
|---|---|---|---|
| | Manual | Semi-Automated | Fully Automated |
| 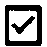 Set COM Frequency to 121.5 | Yes | Yes | Yes |
| Divert the Aircraft to Nearest 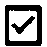 Airport | Yes | Yes | No |
| 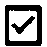 Ditch airplane on a crest parallel to the swell | Yes | No | No |

Table 1 above shows a checklist for an emergency situation such as when an engine has failed and the checklist includes the tasks of setting a communication (COM) frequency setting, diverting to an airport, and ditching the airplane, for example. For each task on the checklist, a "Yes" is provided at each automation level column to show that the automation level is available for the task in a particular row, and a "No" is provided when the automation level is not available for that task. A checkbox at the task may indicate the task has been analyzed or updated.

Other example checklists may be provided such as for landing gear deployment/retraction, fuel management tasks, cabin pressure settings, aircraft lighting (landing lights, taxi lights, etc.), anti-icing systems, oxygen system management, autobrake settings, aircraft navigation settings (waypoints, routes, etc.), fuel flow/engine power settings, weight and balance warnings, flight path angle (climb/descent rates), oxygen mask deployment, auto-land, speed brakes (spoilers), trim control adjustments, landing flap settings, autothrust/autothrottle, air conditioning/pressurization control, windshield wiper operation, cargo compartment temperature or ventilation, aircraft configuration changes (e.g., seat configuration, galley setup), airfield/taxiway lights, flight data monitoring and alerting, seatbelt sign control, cargo door/access panel automation, autopilot approach mode (for instrument landing system (ILS), vertical navigation (VNAV), etc.), weather radar adjustment, and many others. The operation, type, or objective of the checklists is not particularly limited in any for the purposes of the automation level assignment disclosed herein.

Process 300 may include "generate default automation index" 304, and this refers to simply rearranging the data of the feasibility table in an initial or default automation index. The default automation index is established initially (or as a "default") before real-time factors are used to revise the table (as mentioned below, this default operation may be omitted when desired but provides a clearer understanding of the operations herein). In one example case, the tasks are grouped by uniform available automation level. In other words, all the tasks to be performed manually are grouped together as a set, as well as the semi-automated tasks, and the fully automated tasks. When a task does not have all three (or all automation levels) available, then that is indicated as well. Table 2 below shows an example default automation index where each column indicates tasks of a different automation level except where an automation level is not available (not feasible) as indicated by the *. Table 2 is showing the same tasks as Table 1 above where ditching of the aircraft must be performed manually as shown. Each column can then be used to display a separate task list of tasks with the same automation level (whether or not tasks unavailable for the automation level of the display (or here table column) are shown on that automation level display anyway).

**Table 2: Default Automation Index**

| MMECL Task | Default Automation Index | | |
|---|---|---|---|
| | 1 (Man.) | 2 (Semi) | 3 (Full) |
| 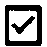 Set COM Frequency to 121.5 | Manual | Semi-Automated | Fully Automated |
| Divert the Aircraft to Nearest 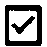 Airport | Manual | Semi-Automated | Fully Automated |
| 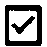 Ditch airplane on a crest parallel to the swell | Manual | Manual* | Manual* |

The feasibility table and/or default automation index may be generated by the preliminary factor unit 206 that may or may not be remote from the vehicle as mentioned and may store the table or index at feasibility database 207.

In one example approach, and before performing the real-time vehicle-specific context factoring, the feasibility data at database 207 is held remotely form the vehicle and may be communicated to one or more vehicles that will use the automation level adjustment method and system 200. This may include transmitting the feasibility tables themselves in which case, the default automation index may be omitted and the real-time factors may be analyzed directly to generate an adapted automation index. Otherwise, the default automation index may be transmitted as well or instead of the feasibility table. As another approach, the system 200 may transmit any other suitable and expected forms of the automation level availability as shown on the feasibility table or default automation index for the various checklists being managed on the vehicle. Such communication may be performed by using the communication system 112, and the automation level feasible availability may be received by the TLALG unit 202 on the aircraft or vehicle.

Once the feasibility data is received at the TLALG unit 202, the TLALG unit 202 analyzes the vehicle real-time context to dynamically allocate or assign tasks an automation level from fully automated to manual control based on the real-time context. One of the initial TLALG unit 202 operations is to monitor the vehicle real-time context as a mission progresses to maintain contextual awareness of the vehicle before, during, and/or after a mission (or flight for an aircraft). Contextual awareness enables the adaptive automation system (or TALA system 200) to make informed decisions about automation level allocation/assignment to the tasks.

Thus, process 300 may include "monitor vehicle real-time task automation context" 306, and the TLALG unit 202 assesses various real-time context factors such as vehicle operator workload, mission objectives and phase, environmental factors, and technical feasibility assessment to determine which tasks are suitable for automation and which require human oversight.

Specifically, operation 306 may include "factor vehicle state" 308, where the vehicle state unit 250 of the automation list adjustment (or adaption) factors unit 240 may provide vehicle sensor data values, levels, summaries, or any other suitable sensor data format expected by the TLALG unit 202 to report the status of the aircraft or vehicle. For an aircraft, this may include the general status of an avionics system such as cruising or may include any parameters set at any of the avionics systems, such as the vertical and horizontal position of the aircraft from the aircraft's navigation system and/or a flight plan from the FMS. This operation 308 also may include obtaining and reporting a general state of any of the aircraft systems or components, such as landing gear up, and/or specific status of components or devices such as for the engines or any of the flaps, control settings such as for brakes, thrusters, yoke, and/or pedals for example, any other aircraft parameter settings such as radio frequency, and so forth.

Operation 306 may include "factor operator workload" 310, and specifically, the workload of the vehicle operators that are to perform and/or monitor the tasks of the checklists in the vehicle or those that will view the checklists and report the tasks to other vehicle operators that will perform and/or monitor the tasks on the vehicle. For this operation, continuous monitoring of the crew's cognitive workload improves the effectiveness of the adaptive automation. By utilizing the sensors and data inputs mentioned above, such as cameras in a cockpit, for the workload monitoring, the system monitors the crew's mental engagement and stress, better ensuring that automation levels are adjusted to prevent cognitive overload or underload. Thus, rule-based algorithms, machine learning, and/or neural networks may receive input sensor data and that are pre-trained on historical workload monitoring data to provide conclusions as to the state of the vehicle operators. This may be performed by the crew workload unit 248 that may provide reports indicating the general status of the crew as a whole, such as with a range of 0 to 5 as to the stress levels and busyness of the crew, and/or may provide such a report on one or each individual vehicle operator. These reports also may be individualized to specific tasks being performed.

Operation 306 may include "factor environment" 311, where the weather at the vehicle and/or in the path of the vehicle ahead along a flight plan for example may be reported to the TLALG unit 202 from the environmental unit 244. Such weather may be obtained from an on-board aircraft weather system, data received from external weather systems, and/or from weather reports through radio or other communications including when ATC or other broadcasters providing audio weather reports. The aircraft or vehicle may have speech recognition systems to monitor the audio in the cockpit of the aircraft or vehicle.

Operation 306 may include "factor mission phase/objective" 312, where the phase mission (which may include determining a mission objective for the purposes herein) may be provided by the FMS for example, such as taxiing or airside travel, take-off, cruising, and landing. More specific phases may be provided such as holding pattern, approach, and so forth. The mission objectives may be an end objective such as a destination or airport, intermediate location objective such as a waypoint or elevation, or specific flight parameters such as a thrust level. The objective may be related to a particular operation or checklist, such as landing with an engine failure. The resulting data, summaries, or conclusions from the real-time monitoring collectively may be referred to as the vehicle real-time context.

Process 300 may include "generate real-time context automation level adjustments" 314. For this operation, the TLALG unit 202 uses the real-time context (or input) from the real-time or automation list adjustment factors unit 240 to determine whether the automation levels of the tasks on checklists to be performed on the vehicle or aircraft, or are currently being performed on the vehicle or aircraft, should be changed. The TLALG unit 202 may perform this analysis by using rule-based systems, fuzzy logic, machine learning, neural networks, reinforcement learning, multi-criteria decision making, Markov decision processes, adaptive control systems, genetic algorithms, or others, and any combination of these. When a change in automation level is warranted, and is available by using the feasibility of Table 1, or default automation index (table 2) if being used, two different changes can be performed. First, the TLALG unit 202 simply changes which automation level list (1 to 3) on the adaptive automation index is to be used for all of the tasks on the checklist and as the automation level is available on adaptive automation index. Thus, for example, as a default, column 1 (Manual) operations were going to be used for a checklist, but real-time context shows that it is better to use the fully automatic list of column 3 (Full) instead as a first checklist.

As yet another way to factor the real-time context, the default automation index is modified or updated to provide as the first checklist and that has one or more tasks (a single row) in only one of the lists (one of the columns 1 to 3) that is changed or updated with a different automation level to factor vehicle real-time context in a single cell and for a specific task as shown below on Table 3. Thus, in this example, say the semi-automated list (column 2 (Semi)) is to be used for execution and display but that the vehicle real-time context shows that the "divert the aircraft ... " task should be fully automated (as a random example), then this cell (designated at ** on Table 3) on the adaptive automation index of Table 3 may be changed to show fully automated. Note this is permissible (i.e., feasible or available) since using a fully automated diverting task is already permitted as shown in column 3. With this change on the adaptive automation index (Table 3), column 2 (Semi) still can then be used to display a semi-automated task list except now the diverting task is shown as fully automated.

**Table 3: Adaptive Automation Index**

| **MMECL Task** | **Adaptive Automation Index** | | |
|---|---|---|---|
| | 1(Man.) | 2(Semi) | 3(Full) |
| 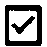 Set COM Frequency to 121.5 | Manual | Semi-Automated | Fully Automated |
| Divert the Aircraft to Nearest 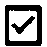 Airport | Manual | Semi-Automated ** | Fully Automated |
| 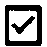 Ditch airplane on a crest parallel to the swell | Manual | Manual* | Manual* |

Each column or automation level group can then be displayed separately on the vehicle to inform the vehicle operator of the task automation levels and to provide an opportunity for the vehicle operator to change the task automation levels. As mentioned, each set or group of tasks with the same automation level may be displayed together in a single checklist and as corresponding to the task set or column on the adapted automation index. The checklists from the adaptive automation index (after real-time factors have been considered) may be referred to herein collectively as a first checklist simply for clarity and referring to a first checklist to be displayed on the vehicle. Thus, the first checklist may include the separate task list displays or pages to be displayed, including one for fully automated tasks, one for semi-automated tasks, and one for manual tasks to be performed manually by the vehicle operator. It will be understood that each automation level may have more than one page and as many that are needed to display all of the tasks assigned to a single automation level task list (also referred to herein as an automation level-specific task list).

Process 300 may include "determine most likely automation level list to display first" 315. After modifying the automation levels on the adaptive automation index, if needed, the system determines which of the three automation level-specific task lists (for fully automated, semi-automated, or manual tasks) to display first. These automation level-specific tasks lists are displayed as a convenience feature so that the vehicle operator can change all of the tasks of the same automation level to another available automation level. This is convenient for the vehicle operator because much of the automation level adjustments by the vehicle operator (or pilot) are to change the automation level of a group or entire list of the tasks and to a different uniform automation level (such as from fully automated to manual), and it is usually rarer for the vehicle operator to change the automation level of a single task on a checklist. For example, a first checklist may have a task list of fully automated tasks for landing. The pilot may want to change all of the tasks for landing to manual in bad weather. The pilot often does not have the time to review the landing tasks one by one to individually change the automation level to manual operation. Also, a single checklist may have many tasks that may need to be reviewed on many display pages.

Thus, the TLALG unit 202 may determine which of the three automation level-specific task lists of the first checklist is to be displayed first. The TLALG unit 202 may factor the vehicle real-time context already generated for the vehicle as described above. The TLALG unit 202 may choose the list with the most urgent tasks or tasks to be performed first at a point in time, such as currently for the aircraft. Other priorities for the selection of the task list to display may be used instead. Also, the first checklist may have less than three of the different available automation level task lists represented, and in one example when only one of the automation level-specific task lists is being used for a certain checklist, in this case no decision is needed.

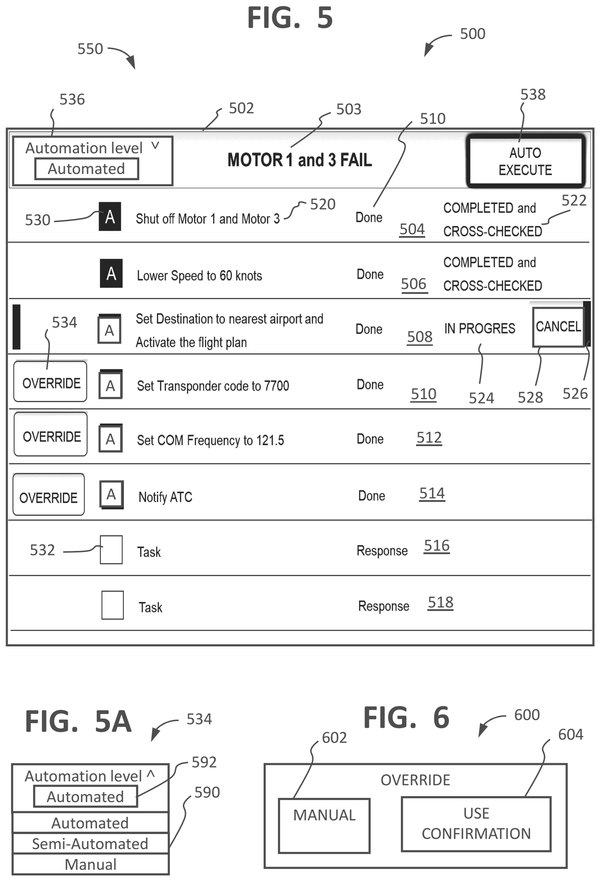

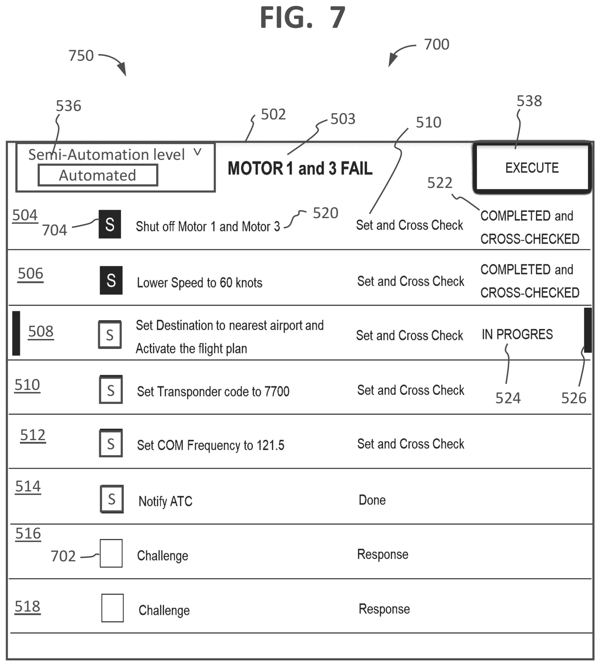

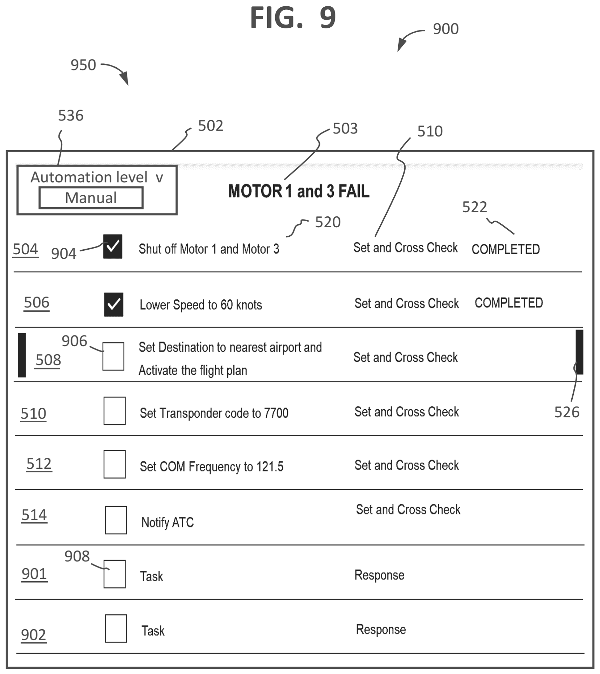

Process 300 may include "display first checklist showing task automation levels" 316, and this operation 316 may include " display list of tasks only with the same automation level" 317 and as mentioned above. The selection of the task list (also referred to as an electronic checklist (ECL)) to display first may be based on the adaptive automation index (Table 3). When the manual task list is selected, the tasks in the adaptive automation index (Table 3) are displayed with the automation levels of column 1 (Man.). An example display of a manual task list is shown on FIG. 9. When the semi-automated task list is selected, the tasks in the automation index (Table 3) are displayed with the automation levels of column 2 (Semi). An example display of a semi-automated task list is shown on FIG. 7. When the fully automated task list is selected, the tasks in the automation index (Table 3) are displayed with the automation levels of column 3 (Full). An example display of a fully automated manual task list is shown on FIG. 5.

When multiple automation level-specific task lists are generated for the first checklist, and after showing the first automation level-specific task list, the TLALG unit 202 then may display the different automation level-specific task lists in any desired order, whether having the next most immediate tasks to be performed or some other criteria.

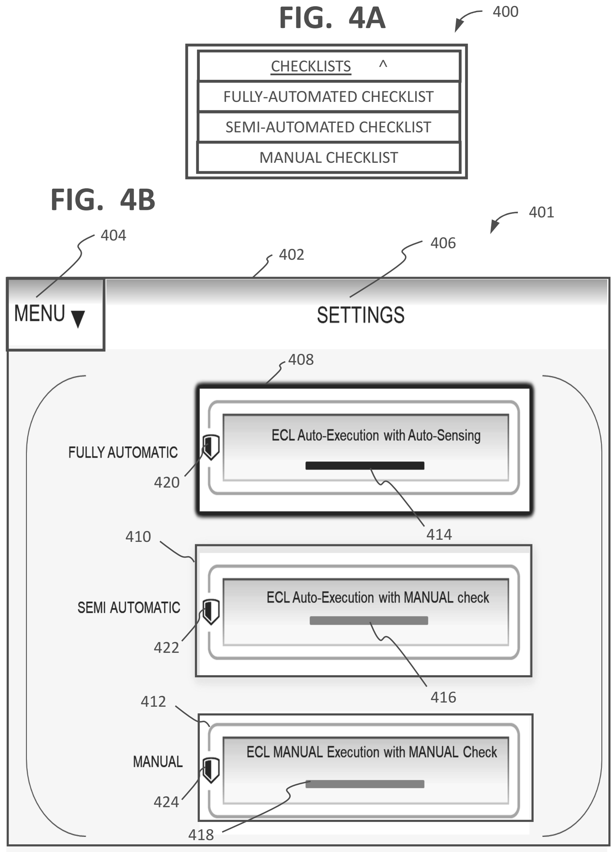

With regard to the display of the task lists or checklists disclosed herein, the vehicle operator may view the lists by engaging a checklist activator on any desired avionics screen or display, and by one form, may be a tab along with other tabs on an FMS menu page or multi-function display (MFD) to name a few examples. Many variations are contemplated. Pressing the tab may bring up the first task list selected to be displayed by the TLALG unit 202 or a menu/setting page (FIG. 4B-4C described below).

Referring now to FIG. 4A for an optional example, rather than having the TLALG unit 202 select which automation level-specific task list to display first, or after the TLALG unit 202 selects a task list to display first, a checklist menu image 400 may be displayed on a separate page or on any checklist-related page mentioned herein. The checklist menu image 400 may have a selection for each available automation level task list, here being manual, semi-automated, and full automated, and each option may be a GUI in the form of a button or other activator that can be clicked with an input device such as a mouse or may be touched when the display device has a touch screen as the input device. The GUI may have many different structures. When one of the automation levels is activated, the automation level-specific task list is rendered on the display device of the selected automation level.

Referring to FIG. 4B, once the vehicle operator presses the checklist tab, and instead of the first automation level-specific task list, a main checklist menu page 401 may be displayed with an image 402 that has two tabs including a menu tab 404 and a settings tab 406. The settings tab 406 displays three global activators such as buttons 408, 410, and 412 each for a different automation level which are labeled as shown. The fully automated activator 408 also is titled ECL Auto-Execution with Auto-Sensing, referring to the fact that no manual confirmation is needed. The semi-automated activator 410 is titled ECL Auto-Execution with MANUAL check, where the vehicle operator is to confirm the operation or parameters for the semi-automated task. The manual activator 412 is titled ECL MANUAL Execution with MANUAL Check. Each activator may have a light 414, 416, or 418 respectively, and/or a selection indicator 420, 422, or 424, respectively, to indicate which activator is selected or on.

By one example implementation, when the vehicle operator selects one of the three global activators 408, 410, or 412, the TLALG unit 202 performs a global change operation and will change the automation level of all tasks to the selected automation level of all checklists, if available from the automation index, and regardless of which task list a task is on. This applies to any task list or checklist being used for a current operation or upcoming operation being planned or that is "on", and may be applied at various levels depending on which checklists are being worked. For example, if the only checklist open or being worked on is a landing gear checklist, then only the landing gear tasks will be changed to the selected automation level. Alternatively, if a general landing checklist is being worked on or open, and the landing gear is one of many landing-related checklists included such as a lighting checklist, an approach checklist, and so forth, all of the tasks of all of the checklists that are part of the general landing checklists will have their tasks changed to have the selected automation level.

This global change operation may permit the vehicle operator to change the automation level among any of the available automation levels but as limited by the automation index and the feasibility settings from Tables 1-3. Thus, the automation levels can be changed in these examples from fully automated to manual or semi-automated, from semi-automated to fully automated or manual, and from manual to fully automated or semi-automated as long as the change is available from the automation index and/or feasibility table.

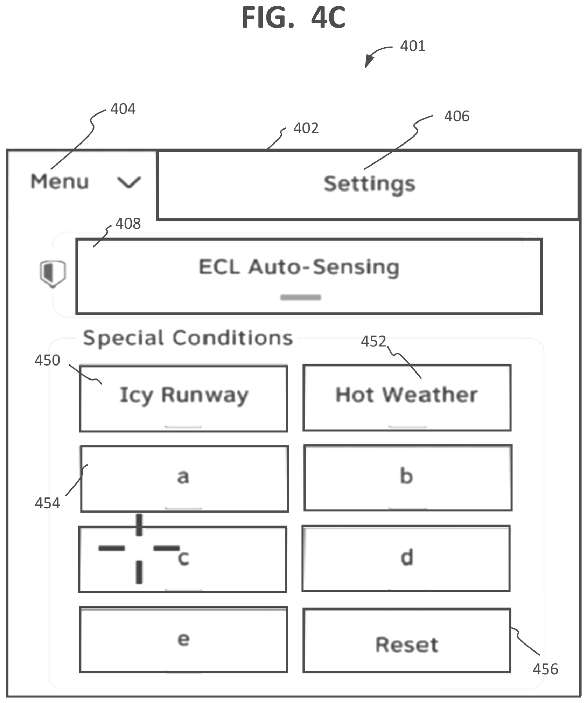

Referring to FIG. 4C, the menu tab 404 on the main menu image 402 may provide additional factors to be considered for a particular automation level. The automation level (here fully automated 408) is selected to add a special condition. This may include activators for special conditions such as an icy runway 450, hot weather 452, and so forth, and may have a reset button 456 and other empty buttons 454 to update the image 402 with other special conditions as desired.

Referring to FIG. 5, a display 500 shows a fully automated level task list 550 with an adaptive checklist that depicts an ECL with automatic checklist execution and with auto-sensing capability on a task list image 502 rendered on a display device. A title of the operation or task list, here being "Motor 1 and 3 fail" 503, is placed over task lines or rows 504 to 518 numbered evenly and that are part of tasks for the checklist with the title 503. Tasks 504 to 514 are shown with a label of the task 520 in one column and a task status 510 in another column. Task rows 516 and 518 do not have tasks (also referred to as challenges) filled in the rows. A column 510 provides the action to be performed and is labeled "done" or other indicator when the action is completed. Another column 522 provides a verification of the completed task or other status such as "completed and cross-checked". The cross-check here is an internal automatic cross-check for fully automated tasks.

Also, operation 306 also may include "display task status feedback" 318 and these feedback updates may be received as the mission progresses and the vehicle real-time context monitoring is continued to provide status updates of the tasks and the real-time factors that may change the task status as well as the automation level to be used for a task. Thus, the task status feedback may refer to changes in the status and verification columns 510 and 522, but otherwise may be listed on a separate page if more space is needed. Also, the TLALG unit 202 may update the automation levels on the adaptive automation task Table 3 list or lists to be used as the monitoring is performed and to change the automation levels of the tasks as mentioned herein.

In another implementation, and on the task list image 502, bars 526 show which task is in progress along with an 'in progress' verification label 524 in column 522. A cancel button 528 also is shown for the row of the task 508 in progress to cancel the task when desired. The bars 526 may be highlights, physical lights, or simply image data of a certain color such as red or blue.

In yet another implementation, automation level indicators 530 are provided for individual tasks, and here are labeled 'A' for fully automated tasks. A black background of the automation level indicators 530 indicates a completed task while a white background indicates a task to be completed yet. The rows 516 and 518 without a task have empty automation level indicators 532. While not shown, the fully automated execution of the tasks of the checklist may also have an option to read-out the checklist items under execution as a voice alert.

The task list image 502 also may show GUIs such as an Automation level selection drop-down menu 536, an 'AUTO EXECUTE' button or other activator 538 that initiates the checklist execution, and an 'OVERRIDE' button or other activator 534 that enables the vehicle operator to change the automation level of some of the tasks as explained below.

Referring to FIG. 5A, and as to the automation level selection drop-down menu 536, process 300 may include "receive vehicle operator task automation selections" 320. Thus, the GUI here may be a human machine interface (HMI) touchscreen or alternatively the menu 536 may be interconnected to a keyboard, mouse, etc. for operator selection of an automation level on the menu where the menu has buttons or other activators 590 for automated (referring to fully automated), semi-automated, and manual for the electronic checklist for mission management. The selected or current automation level for the task list 550 is shown in a window 592, and all tasks on the displayed task list 550 are then changed to have the selected automation level when available to the task.

Referring to FIG. 7, a display 700 shown on a display device shows a task list image 502 with a semi-automated task list 750 or in other words, an adaptive ECL or checklist with semi-automation with a manual check. Many of the features on the display 700 are the same or similar to those on display 500 and are numbered the same or similarly such that they do not need to be described again here. Relevant here, automation level indicators have an 'S' to indicate semi-automated, and empty indicators 702 are shown where no task is in that row 516 or 518. Also in this example, activating the execute button 538 here will perform automatic execution until confirmation from the vehicle operator is needed. Then, the avionics display (FIG. 8) will be automatically opened (or rendered or shown) and that has a request (or confirmation activator) to receive the vehicle operator's confirmation is automatically opened. This is explained in detail below with operation 330. It also will be appreciated that the same automation level menu 536 is provided on the display 700 for the vehicle operator to change the automation level of the tasks on the semi-automated task list 750 as in its current state to a different selected automation level and as available from the feasibility tables and automation index.

Referring to FIG. 9, a display 900 shown on a display device shows a task list image 502 with a manual task list 950 or in other words, an adaptive ECL manual execution list with manual checks. Many of the features on the display 900 are the same or similar to those on display 500 and are numbered the same or similarly such that they do not need to be described again here. Relevant here, automation level indicators 904 with a checkmark are for those tasks that were manually completed, while empty indicators 906 indicate tasks to be performed or completed yet. Empty indicators 908 shows rows 901 and 902 where no task has been provided.

Continuing now with example process 300, operation 320 may include "receive automation level selection(s)" 322, and this selection may refer to the global selection described above to change all tasks on all checklists of a current or upcoming operation. The TLALG unit 202 receives the global signal to make a change to the automation levels through-out the relevant task lists as described above, and make the appropriate changes to the adaptive automation index as needed.

Operation 320 also may include "receive uniform automation level selection for list of tasks all with the same automation level" 323. For any of the automation level-specific task lists 550, 750, and 950, here the vehicle operator selection of a change of automation level on the menu 536 is applied, and the selection or selection signal is received by the TLALG unit 202 to change all of the tasks on the task list 550, 750, or 950 to another selected automation level for that particular task list. Referring to changing all tasks on a task list of course ignores the tasks that cannot be changed when an automation level is not available or feasible as described above.

Referring again to FIG. 5, operation 320 also may include "receive override command" 324. Particularly, the images 502 may have an override button (or other GUI or activator) 534 placed at individual task rows, here being 510, 512, and 514 to change an individual task automation level. The vehicle operator may click on or touch an override button 534 to automatically change the automation level from fully automated to manual operation. Referring to FIG. 6 for another example approach, activating an override buttons 534 may open an override window 600 that provides the vehicle operator an option to select manual operation with a "manual" button 602 or semi-automated operation with a "use confirmation" button 604 where either GUI buttons may be other activators, and for the individual task associated with the override button 534. The override activators 534 also may be provided on the semi-automated task list 750 (FIG. 7) when desired and to provide the option to change the tasks from semi-automated to manual operation. With these override options, vehicle operators have the flexibility to switch between the automation levels based on their own assessment of the mission's requirements providing significant flexibility of the automation of the tasks and improved tracking of the task progress on the checklists.

By the example form of process 300 and system 200 described herein, it will be noted that no option exists to change an individual task from a manual automation level to either the fully or semi-automated levels. This can only be performed in sets whether by the global selection or by changing one of the automation level-specific task list. This eliminates one of the most time-consuming and workload increasing options as explained above. By other alternatives, such an option may be provided anyway.

Thus, the task list displays provide an intuitive user interface that allows crew members or vehicle operators to easily access and control the adaptive automation features. Clear visualization of automated tasks, their status, and the ability to override or intervene manually is seamlessly integrated into the interface (or checklist displays or pages).

Process 300 may include "revise first checklist" 326, and this includes adopting the changes to the task automation levels provided by the vehicle operator and resulting in a revised task list that is to be executed. This may include the global changes, the automation level-specific task list changes, and the override changes. Such changes may be stored in a table in a database, and may be a revised and current adaptive automation index that is to be used going forward. Any other suitable data structures for holding the current task automation levels may be used instead.

Process 300 may include "generate and implement commands for vehicle systems according to latest checklist" 328, where the avionics systems are provided with signals to set the automation level of the tasks to be performed and the tasks of the checklist are then executed according to the automation levels and as explained herein.

Referring to FIG. 8, and with particular mention of the semi-automated tasks, process 300 may include "automatically display confirmation page(s) for semi-automatic tasks" 330. As mentioned above, once a semi-automated task progresses to a point where a confirmation is needed from a vehicle operator, whether to confirm a parameter value or merely approve automatically progressing with the task, an avionics confirmation page 800 may be automatically displayed or "popped up" in a corresponding graphics window or screen whether on the same display device or another display device, and whether on the vehicle or a remote location if desired. The confirmation page 800 enables a pilot to confirm the action initiated through the checklist window. For example, say a pilot needs to swap a radio frequency on a radio page 800 and manually to activate an emergency frequency entry performed through the checklist, thereby confirming the frequency setting. The radio page 800 may have a master volume section 804, two VHF channel sections 806 and 808, a frequency lookup section 810 and a transponder section 812. Relevant here, the VHF1 channel section 806 shows a current frequency 818 of 118.400 and a standby frequency 820 of 121.500 as well as a swap or switch button 814 to change the standby frequency to the current frequency. The avionics radio system automatically sets the standby frequency value, but then a pilot is to confirm the value by pressing the switch button 814 for example. This may permit the pilot to tune the radio of the communications unit to receive audio messages from, or associated with, a certain entity, such as the ATC, Automatic Terminal Information Service (ATIS), AOC, CPDLC, ACARS, and so forth.

It will be appreciated that the avionics or vehicle confirmation page disclosed herein, and particularly that may have confirmation activators to receive a confirmation from the vehicle operator and to perform a task automatically, may be a radio page described, but instead may be the PFD itself, a Multi-Function Display (MFD), a Navigation Display (ND), an Engine Indication and Crew Alerting System (EICAS), a Traffic Collision Avoidance System (TCAS), a Flight Management System (FMS), a Standby Instrument Display, a Radio Management Panel (RMP), an Autopilot Control Panel (ACP), a Weather Radar Display, a Flight Data Recorder (FDR) Display, and/or Cockpit Voice Recorder (CVR) Interface. Many other examples exist.

Process 300 may include "update task status" 332, where the updated task status as well as updated vehicle real-time context may be collected and provided back to the TLALG unit 202 to further modify the automation levels as needed, and to provide the task status updates to the task list displays 500, 700, and 900 as mentioned above with operation 318. This operation provides real-time feedback to the crew regarding the status of the automated tasks. Alerts, notifications, and visual cues may be provided as to the updates as well to maintain high situational awareness and allow crew members to promptly intervene if needed.

It should be appreciated that the process 300 may include any number of additional or alternative operations, and the operations need not be performed in the illustrated order. Also, the operations of process 300 may be performed concurrently, and/or may be incorporated into a more comprehensive procedure or process having additional functionality not described in detail herein. Moreover, one or more of the tasks shown and described in the context of FIGS. 3 can be omitted from a practical implementation of the process 300 as long as the intended overall functionality remains intact.

It should be noted that the terms avionic and avionics are used interchangeably herein to refer to anything related to a flying vehicle.

The subject matter may be described herein in terms of functional and/or logical block, module, or unit components, and with reference to symbolic representations of operations, processing tasks, and functions that may be performed by various computing components or devices. It should be appreciated that the various block components shown in the figures may be realized by any number of hardware components configured to perform the specified functions. For example, an implementation of a system or a component may employ various integrated circuit components, e.g., memory elements, digital signal processing elements, logic elements, look-up tables, or the like, which may perform a variety of functions under the control of one or more microprocessors or other control devices. Furthermore, implementations of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "connected" or "coupled" together. As used herein, unless expressly stated otherwise, "coupled" and "connected" refers to one element/node/feature is directly or indirectly joined to (or directly or indirectly communicates with) another element/node/feature, and not necessarily mechanically. Thus, although the drawings may depict one example arrangement of elements directly connected to one another, additional intervening elements, devices, features, or components may be present in an implementation of the depicted subject matter. In addition, certain terminology may also be used herein for the purpose of reference only, and thus are not intended to be limiting.

The foregoing detailed description is merely example in nature and is not intended to limit the subject matter of the application and uses thereof. Furthermore, there is no intention to be bound by any theory presented in the preceding background, brief summary, or the detailed description.

While at least one example implementation has been presented in the foregoing detailed description, it should be appreciated that a vast number of variations exist. It should also be appreciated that the example implementation or example implementations are only examples, and are not intended to limit the scope, applicability, or configuration of the subject matter in any way. Rather, the foregoing detailed description will provide those skilled in the art with a convenient road map for implementing an example implementation of the subject matter. It should be understood that various changes may be made in the function and arrangement of elements described in an example implementation without departing from the scope of the subject matter as set forth in the appended claims. Accordingly, details of the example implementations or other limitations described above should not be read into the claims absent a clear intention to the contrary.

## Claims

1. A method, comprising:
receiving, by at least one processor, data of an automation index factoring non-real time feasibility factors and comprising individual tasks to operate a vehicle and assignments of the individual tasks each to one of multiple available automation levels, wherein each automation level is associated with a different involvement of a user to perform the individual task to operate the vehicle;
generating, by at least one processor, a first checklist of the tasks comprising factoring vehicle real-time context factors, wherein the vehicle real-time context factors comprise a current state of the vehicle, a workload of at least one vehicle operator, a current phase of a mission of the vehicle, and an environment near the vehicle or to be near the vehicle;
displaying, by at least one processor, the first checklist on a display device on the vehicle;
displaying at least one graphical user interface (GUI) on the display device and providing options of selectable automation levels including fully automated, semi-automated, and manual to be selected by at least one vehicle operator for tasks on the first checklist;
revising, by at least one processor, the first checklist to form a revised checklist depending on an automation level selection by use of the GUI;
displaying, by at least one processor, the revised checklist with the automation level selections; and
transmitting, by at least one processor, one or more signals to at least one vehicle system to perform at least one task from the revised checklist having a changed automation level selection.

2. The method of claim 1, wherein assignment of the automation levels to the tasks of the automation index depends on non-real time factors being at least one of:
capabilities of the vehicle, regulations in an industry of the vehicle, a complexity of the task, repetitiveness of the task, and a priority level of the task.

3. The method of claim 1 or 2, wherein the semi-automated level includes requesting a confirmation from the vehicle operator, and the fully automated level does not include a confirmation from the operator.

4. The method of any one of claims 1-3, comprising displaying the GUI as a menu on an image of a checklist page showing at least part of the first checklist.

5. The method of any one of claims 1-4, comprising displaying the GUI on a separate automation level selection page displayed on the display device.

6. The method of claim 1, wherein the displaying of the first checklist comprises displaying at least one of multiple checklist pages each checklist page with tasks of a different automation level so that tasks with the same automation level are displayed on the same checklist page.

7. The method of claim 1, wherein the displaying of both the first checklist and the revised checklist includes listing tasks of more than one automation level on a single checklist and on a single page.

8. The method of claim 1, comprising displaying an override activator on a checklist page of the display device and shown at multiple individual displayed tasks, wherein the displayed tasks are initially assigned to be fully automated; and
displaying an automation level override option when the at least one vehicle operator selects the override activator so that either manual or semi-automated operation can be selected.

9. The method of claim 1, comprising automatically displaying a vehicle system page with a confirmation activator to be activated by the at least one vehicle operator when a semi-automatic task is being executed and to confirm automatic execution of a task or a parameter to be used when performing the task.

10. A system, comprising:
memory;
processing circuitry forming at least one processor communicatively coupled to the memory and being arranged to operate by:
receiving data of an automation index factoring non-real time feasibility factors and comprising individual tasks to operate a vehicle and assignments of the individual tasks each to one of multiple available automation levels, wherein each automation level is associated with a different involvement of a user to perform the individual task to operate the vehicle;
generating a first checklist of the tasks comprising factoring vehicle real-time context factors, wherein the vehicle real-time context factors comprise a current state of the vehicle, a workload of at least one operator of the vehicle, a current phase of a mission of the vehicle, and an environment near the vehicle or to be near the vehicle;
displaying the first checklist on a display device on the vehicle;
displaying at least one graphical user interface (GUI) on the vehicle and providing options of selectable automation levels including fully automated, semi-automated, and manual to be selected by at least one vehicle operator for tasks on the first checklist;
revising the first checklist to form a revised checklist depending on automation level selections by use of the GUI;
displaying the revised checklist with the automation level selections; and
transmitting one or more signals to at least one vehicle systems to perform at least one task from the revised checklist having a changed automation level selection.

11. The system of claim 10, wherein the at least one processor is arranged to operate by generating data of a feasibility table with the non-real time feasibility factors that lists which automation level is available to individual tasks.

12. The system of claim 11, wherein the automation index is a set of separate checklists each with tasks of a different available automation level as assigned by the data of the feasibility table.

13. The system of claim 12, wherein the first checklist is a modification of the automation index by factoring the vehicle real-time context factors.

14. The system of claim 12, wherein the at least one processor operates by receiving an automation level selection from a checklist page shown on the display device, and changing all tasks on all checklists of multiple checklists to have the selected automation level for tasks that have the selected automation level as an available automation selection level according to at least the feasibility table.

15. The system of claim 10, wherein the at least one processor operates by automatically determining which task list of the first checklist and having all tasks of the same automation level is to be displayed depending on the vehicle real-time context factors.
